# EUROPEAN PATENT APPLICATION

(11) **EP 1 783 335 A1**
(43) Date of publication of application: **09.05.2007**
(21) Application number: 05765564.9
(22) Date of filing: 07.07.2005
(51) Int. Cl.: F01N 3/08, B01D 53/94, F01N 3/18, F01N 3/28

(54) **METHOD OF CONTROLLING EXHAUST PURIFICATION APPARATUS**

(30) Priority: 08.07.2004 JP 2004201948
(71) Applicant: Hino Motors, Ltd., Hino-shi, Tokyo 191-8660 (JP)
(72) Inventor: TSUMAGARI, Ichiro, Hino Motors, Ltd., Hino-shi, Tokyo 1918660 (JP)
(74) Representative: Walcher, Armin
(86) International application number: PCT/JP2005/012545
(87) International publication number: WO 2006/006481

(57) **Abstract**

When urea water U is injected by an addition nozzle 7 upstream of a NOₓ reduction catalyst 6 incorporated in the passage 5 so as to reduce and purify NOₓ in exhaust gas G, a target adsorption amount curve is set by shifting to lower temperature side a saturated adsorption amount curve of ammonia to the catalyst. A target adsorption amount of the reducing agent corresponding to the catalyst temperature is calculated and an actual adsorption amount of the reducing agent to the catalyst is determined. The amount of the urea water U to be added upstream of the catalyst is reduced when the actual adsorption amount reaches the target adsorption amount, and is increased when the actual adsorption amount is lower than the target adsorption amount. Thus, the adsorption amount of ammonia is secured while preventing ammonia from adsorbing so as to save the urea water U.

## Description

### Technical Field

The present invention relates to a method for controlling an exhaust emission control device.

### Background Art

There has been proposed an exhaust emission control device (see for example References 1 and 2) wherein selective or NOₓ reduction catalyst, which causes nitrogen oxides (NOₓ) to selectively react with a reducing agent even in the presence of oxygen, is incorporated in an exhaust passage of a diesel engine for a vehicle, thereby attaining reduction in discharged NOₓ concentration. The reducing agent used is urea water which can be more easily dealt with than ammonia.

In such exhaust emission control device, a nozzle (reducing agent adding means) for addition of urea water is arranged upstream of the catalyst. Addition of the urea water with catalyst temperature of more than about 200°C causes the urea water to be decomposed into ammonia and carbon monoxide, and NOₓ in the exhaust gas is reduced and purified by the catalyst and ammonia.

Any surplus ammonia is once adsorbed to the catalyst and then contributes to reduction treatment of NOₓ.
[Reference 1] JP 2002-161732 A
[Reference 2] JP 2002-513110 A

### Summary of the Invention

### Problems to be Solved by the Invention

However, no consideration has been taken up to the present as to optimization in adsorption amount of the reducing agent to the catalyst.

The invention was made in view of the above and has its object to optimize an adsorption amount of a reducing agent to NOₓ reduction catalyst.

### Means or Measures for Solving the Problems

The above-mentioned object will be attained by the invention as follows: When a reducing agent is added upstream of a NOₓ reduction catalyst incorporated in an engine exhaust passage so as to reduce and purify NOₓ in exhaust, a target adsorption amount curve is set by shifting to lower temperature side a saturated adsorption amount curve which represents relationship between catalyst temperature and saturated adsorption amount of the reducing agent to the catalyst. Then, a target adsorption amount of the reducing agent corresponding to the catalyst temperature is calculated and an actual adsorption amount of the reducing agent to the catalyst is determined. An amount of the reducing agent to be added upstream of the catalyst is reduced when the actual adsorption amount reaches the target adsorption amount, and is increased when the actual adsorption amount is lower than the target adsorption amount.

In addition, predictive catalyst temperatures after elapse of predetermined time periods are determined on the basis of the catalyst inlet and outlet temperatures, ambient temperature, sucked air amount and heat capacity of the catalyst. The predictive catalyst temperatures are used to correct the shift amount for the target adsorption amount curve.

In the invention, when the actual adsorption amount reaches the target adsorption amount, the amount of the reducing agent to be added upstream of the catalyst is reduced so as to save the reducing agent.

When the actual adsorption amount is lower than the target adsorption amount, the amount of the reducing agent to be added upstream of the catalyst is increased to secure an adsorption amount of the reducing agent to the catalyst while dealing with the reduction of NOₓ.

Furthermore, the shift amount for the target adsorption amount curve is corrected on the basis of the predictive catalyst temperatures, thereby changing the target adsorption amount as a measure of the amount of the reducing agent to be added.

### Effects of the Invention

According to a method for controlling an exhaust emission control device of the invention, the following excellent effects and advantages can be obtained:

(1) An amount of the reducing agent to be added upstream of the catalyst is reduced when an actual adsorption amount of the reducing agent to the catalyst reaches the target adsorption amount, so that adsorption amount of the reducing agent to the catalyst can be secured. Thus, even if NOₓ in the exhaust abruptly increases, such NOₓ can be promptly and reliably dealt with into reduction and the reducing agent can be also saved.

(2) The amount of the reducing agent to be added upstream of the catalyst is increased when the actual adsorption amount of the reducing agent to the catalyst is lower than the target adsorption amount, an adsorption amount requirement of the reducing agent to the catalyst can be secured in parallel with dealing with the reduction of NOₓ. Even if NOₓ in the exhaust further increases, such NOₓ can be promptly and reliably dealt with into reduction.

(3) Since the actual adsorption amount of the reducing agent to the catalyst is made consistency with the target adsorption amount, the reducing agent adsorption amount never reaches the saturated adsorption amount and the reducing agent does not desorb from the catalyst.

(4) The target adsorption amount is changed depending upon the predictive catalyst temperatures, so that the amount of the reducing agent to be added can be reliably controlled.

### Brief Description of the Drawings

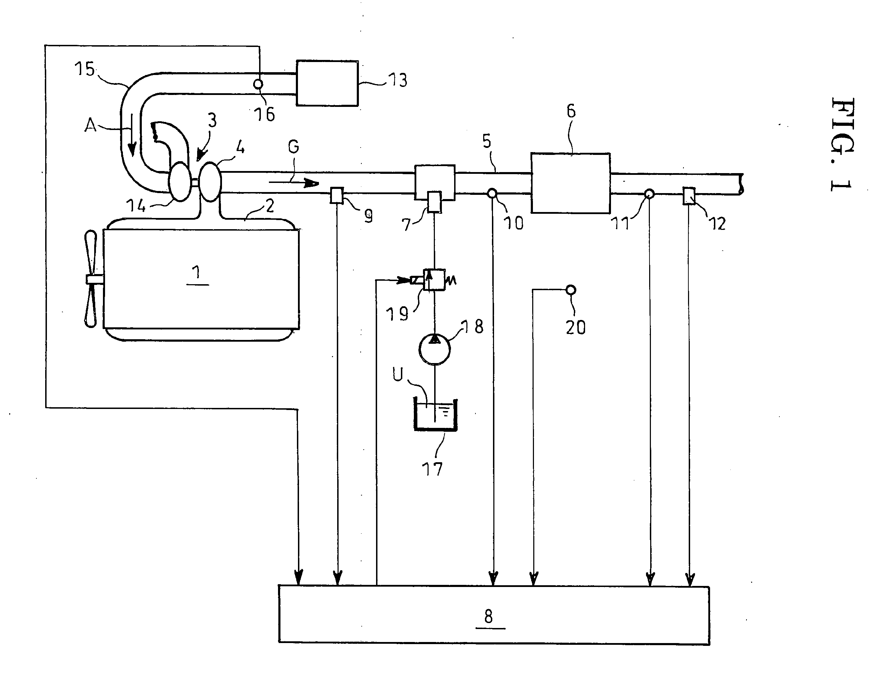

[Fig. 1]
   A schematic view showing an example of an exhaust emission control device to which the invention is applied.
[Fig. 2]
   A block diagram for a control unit in Fig. 1.
[Fig. 3]
   A diagram showing relationship between target adsorption amount and saturated adsorption amount of ammonia to NOₓ reduction catalyst.
[Fig. 4]
   A diagram showing relationship between adsorption amount of ammonia to NOₓ reduction catalyst and equivalence ratio of injection amount of urea water.

### Explanation of the Reference Numerals

5 exhaust passage
6 NOₓ reduction catalyst
G exhaust gas
U urea water (reducing agent)

### Best Mode for Carrying Out the Invention

An embodiment of the invention will be described.

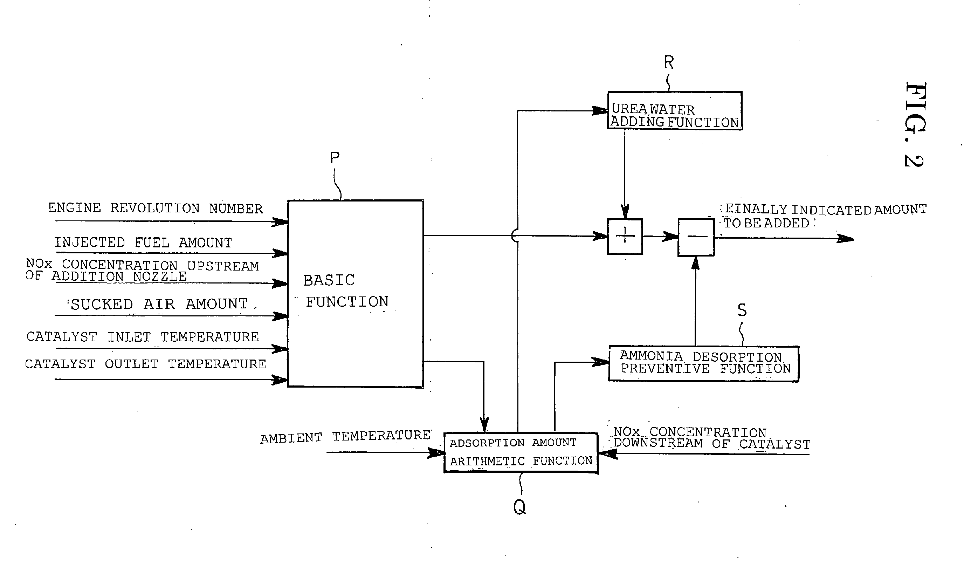

Figs. 1 to 4 show the embodiment of the invention which comprises NOₓ reduction catalyst 6 incorporated in an exhaust passage 5 through which flows exhaust gas G discharged from an exhaust manifold 2 of a diesel engine 1 via a turbine 4 of a turbocharger 3, an addition nozzle 7 arranged upstream of the catalyst 6 for spraying urea water U to the exhaust gas G, and an electronic control unit (ECU) 8.

Incorporated in the exhaust passage 5 are a NOₓ concentration sensor 9 upstream of the nozzle 7, a temperature sensor 10 on an inlet side of the catalyst 6 and a temperature sensor 11 and a NOₓ concentration sensor 12 on an outlet side of the catalyst 6.

Incorporated in a suction passage 15 from an air cleaner 13 to a compressor 14 of the turbocharger 3 is an air flow sensor 16 for detection of flow rate of air A.

The nozzle 7 is connected through an electromagnetic valve 19 to a pump 18 which pumps up and delivers urea water U accumulated in a tank 17.

The control unit 8 has a basic function P of calculating an amount of the urea water U to be injected by the nozzle 7 upstream of the catalyst 6 on the basis of, for example, NOₓ concentration upstream of the nozzle 7 sensed by the sensor 9, catalyst inlet and outlet temperatures sensed by the sensors 10 and 11, respectively, NOₓ concentration downstream of the catalyst 6 sensed by the sensor 12, flow rate of the air A (sucked air amount) sensed by the sensor 16, ambient temperature sensed by a temperature sensor 20, engine revolution number and injected fuel amount, and has an adsorption amount arithmetic function Q of calculating an actual adsorption amount of ammonia to the catalyst 6, a urea water adding function R capable of increasing/decreasing an amount of the urea water U to be added upstream of the catalyst 6 depending upon the actual adsorption amount of ammonia and an ammonia desorption preventive function S.

The adsorption amount arithmetic function Q is such that reduced NOₓ flow rate is determined from reduced NOₓ concentration and exhaust flow rate, said reduced NOₓ concentration being calculated by subtracting NOₓ concentration downstream of the catalyst 6 from that upstream of the nozzle 7, said exhaust flow rate being calculated from the sucked air amount and the injected fuel amount through functional formula; HC and CO values are calculated from a map by using the engine revolution number and the injected fuel amount to thereby correct the reduced NOₓ flow rate; a consumed amount of the urea water is calculated on the basis of the corrected, reduced NOₓ flow rate; the consumed amount of the urea water U is subtracted from the injected amount of the urea water U obtained by the basic function P; the thus obtained value is added up to determine the actual adsorption amount of ammonia to the catalyst 6.

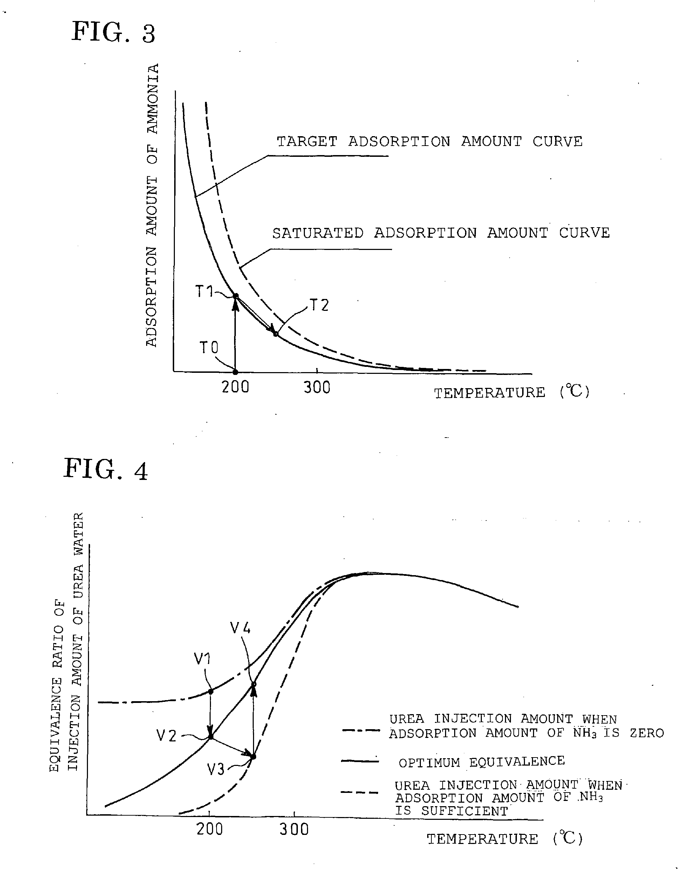

The urea water adding function R is such that a target adsorption amount curve is set (see Fig. 3) by shifting the saturated adsorption amount curve, which represents the relationship between catalyst temperature and saturated adsorption amount of ammonia to the catalyst 6, to lower temperature side (for example to position lowered by 20°C); a target adsorption amount of ammonia to the catalyst 6 is calculated depending upon the catalyst temperature; and when the actual adsorption amount of ammonia determined by the adsorption amount arithmetic function Q is lower than the target adsorption amount, increased is the amount of the urea water U to be added upstream of the catalyst 6 calculated by the basic function P.

The ammonia desorption preventive function S is such that the target adsorption amount of ammonia to the catalyst 6 depending on the catalyst temperature is calculated in a similar way that in the urea water adding function R; and when the adsorption amount of ammonia determined by the adsorption amount arithmetic function Q increases to reach the target adsorption amount, reduced is the amount of the urea water U to be added upstream of the catalyst 6 calculated by the basic function P.

In both of the urea water adding function R and the ammonia desorption preventive function S, predictive catalyst temperatures after elapse of predetermined time periods (for example three, e.g., 20 seconds after, 60 seconds after and 15 minutes after) are determined on the basis of, for example, the catalyst inlet and outlet temperatures, the ambient temperature, the sucked air amount and heat capacity of the catalyst 6; and when these predictive catalyst temperatures are on lower temperature side of the target adsorption amount curve, the target adsorption amount curve is shifted to lower temperature side so as to be conformed with the highest value of the three predictive temperatures, whereby the amount of the urea water U to be injected can be properly controlled.

More specifically, when the situation is at TO where the catalyst temperature is 200°C and no ammonia is adsorbed to the catalyst 6, the urea water adding function R increases the amount of the urea water U to be injected through the nozzle 7 to V1 which is beyond the optimum equivalence, so that in parallel with the reduction treatment of NOₓ, the adsorption amount of ammonia to the catalyst 6 comes closer to T1 on the target adsorption amount curve.

This adsorption amount of ammonia never reaches the saturated adsorption amount, so that ammonia never desorbs from the catalyst 6.

That is, the target adsorption amount curve is set such that it does not reach the saturated adsorption amount by temperature increase in any kinds of operation patterns.

Then, as the adsorption amount of ammonia to the catalyst 6 reaches T1, the amount of the urea water U to be injected through the nozzle 7 is reduced by the ammonia desorption preventive function S to V2 of the optimum equivalence.

However, as the urea water continues to be injected by the nozzle 7, the adsorption amount of ammonia to the catalyst 6 can be secured. Thus, even if the amount of NOₓ in the exhaust gas G suddenly increases, such NOₓ can be promptly and reliably reduced and purified.

As the catalyst temperature rises from 200°C to 250°C, the amount of urea water U to be injected through the nozzle 7 is reduced by the ammonia desorption preventive function S to V3 which is lower than the optimum equivalence. As a result, the adsorption amount of ammonia to the catalyst 6 comes closer to T2 on the target adsorption amount curve.

Further, as the adsorption amount of ammonia to the catalyst 6 is lower than T2, the amount of urea water U to be injected through the nozzle 7 is increased to V4 on the optimum equivalent by the urea water adding function R; thus, the adsorption amount of ammonia to NOₓ is compensated on the basis of the target adsorption amount curve.

It is to be understood that a method for controlling an exhaust emission control device according to the invention is not limited to the above-mentioned embodiment and that various changes and modifications may be made without leaving the spirit of the invention.

### Industrial applicability

A method for controlling an exhaust emission control device according to the invention may be applied to various kinds of vehicles.

## Claims

1. A method for controlling an exhaust gas emission control device wherein a reducing agent (U) is added upstream of NOₓ reduction catalyst (6) incorporated in an engine exhaust passage (5) so as to reduce and purify NOₓ in exhaust (G), **characterized in that** a target adsorption amount curve is set by shifting to lower temperature side a saturated adsorption amount curve which represents relationship between catalyst temperature and saturated adsorption amount of the reducing agent (U) to the catalyst (6), that a target adsorption amount of the reducing agent (U) corresponding to the catalyst temperature is calculated and an actual adsorption amount of the reducing agent to the catalyst (6) is determined and that the amount of the reducing agent (U) to be added upstream of the catalyst (6) is reduced when the actual adsorption amount reaches the target adsorption amount, and is increased when the actual adsorption amount is lower than the target adsorption amount.

2. A method for controlling an exhaust gas emission control device according to claim 1, wherein predictive catalyst temperatures after elapse of predetermined time periods are determined on the basis of catalyst inlet and outlet temperatures, ambient temperature, sucked air amount and heat capacity of the catalyst (6), the predictive catalyst temperatures being used to correct a shift amount for the target adsorption amount curve.
